# EUROPÄISCHE PATENTSCHRIFT

(11) **EP 3 094 863 B1**
(45) Veröffentlichungstag und Bekanntmachung des Hinweises auf die Patenterteilung: **14.08.2019**
(21) Anmeldenummer: 14766896.6
(22) Anmeldetag: 28.08.2014
(51) Int. Cl.: F03D 15/00, F16H 57/08

(54) **LAGERANORDNUNG FÜR EIN PLANETENGETRIEBE EINER WINDKRAFTANLAGE**
BEARING ASSEMBLY FOR A PLANETARY GEARING OF A WIND TURBINE
ENSEMBLE DE PALIERS POUR ENGRENAGE PLANÉTAIRE D'ÉOLIENNE

(30) Priorität: 17.10.2013 DE 102013221066
(43) Veröffentlichungstag der Anmeldung: 23.11.2016
(73) Patentinhaber: Schaeffler Technologies AG & Co. KG, 91074 Herzogenaurach (DE)
(72) Erfinder: ENS, Andreas, 97084 Würzburg (DE)
(86) Internationale Anmeldenummer: PCT/DE2014/200428
(87) Internationale Veröffentlichungsnummer: WO 2015/055188

(56) Entgegenhaltungen:
- CN-U- 202 579 059
- CN-Y- 2 895 882
- JP-A- 2009 041 642
- Anonymous: "Single Row Full Complement Cylindrical Roller Bearings-LDB BEARING", LUOYANG LONGDA BEARING CO.,LTD , 9. Februar 2012 (2012-02-09), XP055148739, Gefunden im Internet: URL:http://www.ldb-bearing.com/Bearing-Pro ducts/bearing_0062/bearing_NCF.html [gefunden am 2014-10-24]
- ANONYMOUS: "Radial Cylindrical Roller Bearings", Timken® Products Catalog - ROLLER BEARINGS , 2. September 2010 (2010-09-02), Seiten B325-B350, XP002734191, Gefunden im Internet: URL:http://www.timken.com/EN-US/products/D ocuments/Roller%20Bearings.pdf

## Beschreibung

### Gebiet der Erfindung

Die Erfindung betrifft eine Lageranordnung für ein Planetengetriebe, insbesondere für ein Planetengetriebe einer Windkraftanlage, umfassend einen fest mit einer Welle verbundenen Planetenträger, ein Getriebegehäuse, in dem der Planetenträger angeordnet ist, eine Innenverzahnung des Getriebegehäuses, mit der Innenverzahnung kämmende Planetenräder, ein mit den Planetenrädern kämmendes Sonnenrad und an beiden Seiten der Planetenräder angeordnete Lager zur Lagerung des Planetenträgers in dem Getriebegehäuse.

### Hintergrund der Erfindung

Eine Lageranordnung ist aus der EP 1 431 575 A2 bekannt. Die dort beschriebene Lageranordnung ist Teil eines Planetengetriebes und dient der Lagerung eines Planetenträgers in einem Getriebegehäuse. Der Planetenträger ist über eine Welle mit der Rotorwelle einer Windkraftanlage verbunden.

In ähnlicher Weise offenbart auch die DE 198 57 914 A1 ein Getriebe für eine Windkraftanlage, umfassend einen Planetengetriebe mit einer Lageranordnung. Ein Planetenträger ist dabei mit einer Rotorwelle einer Windkraftanlage verbunden. Der Planetenträger ist in dem Getriebegehäuse mittels zwei an den Stirnseiten des Planetenträgers angeordneten Lagern gelagert. Dem Planetengetriebe ist ein Stirnradgetriebe nachgeschaltet, an dessen Ausgang ein Generator der Windkraftanlage angeschlossen ist. Für die Hauptwellenlagerung in Windkraftanlagen kommen unterschiedliche Lagerkonzepte in Betracht, deren Auswahl auch von der Art und dem Vorhandensein eines Getriebes der Windkraftanlage abhängt.

Eine Windkraftanlage mit Dreipunktabstützung der Rotorwelle ist z. B. aus der DE 10 2006 037 890 A1 bekannt. Dort ist als Rotorhauptlager ein winkeleinstellbares Loslager, nämlich ein Toroidalrollenlager, vorgesehen, während ein Festlager in einem Planetengetriebe angeordnet ist, das durch die Rotorwelle angetrieben wird.

Aus der DE 102 42 707 B3 ist eine Windenergieanlage mit konzentrischer Getriebe/Generator-Anordnung bekannt. Dort ist eine Zweipunktabstützung der Rotorwelle vorgesehen, die bewirken soll, dass aerodynamische Lasten und Massebelastungen des Rotors in den Turm der Windenergieanlage eingeleitet werden, ohne dass das Getriebe oder der Generator durch diese Lasten beaufschlagt werden.

CN202579059U offenbart im vorletzten Absatz der Beschreibung die Merkmale des Oberbegriffes des Anspruchs 1. Der Erfindung liegt die Aufgabe zugrunde, eine Lageranordnung für ein Planetengetriebe anzugeben, die einen einfachen Aufbau aufweist und sich durch eine gute Montierbarkeit auszeichnet.

### Zusammenfassung der Erfindung

Zur Lösung dieser Aufgabe ist bei einer Lageranordnung der eingangs genannten Art erfindungsgemäß vorgesehen, dass beide Lager als Zylinderrollenlager ausgebildet sind, wobei wenigstens ein Zylinderrollenlager einen Innen- oder Außenring mit zwei Borden aufweist, wobei der jeweils andere Ring einen Winkelring oder einen losen Bord aufweist.

Die erfindungsgemäße Lageranordnung eignet sich besonders gut für ein Planetengetriebe einer Windkraftanlage.

Bei der erfindungsgemäßen Lageranordnung ist der Planetenträger fest mit der Welle verbunden, gegebenenfalls kann er auch einstückig mit der Welle ausgebildet sein. Die Weile kann als massives Bauteil oder als Hohlwelle ausgebildet sein, es kann sich dabei um die Hauptwelle der Windkraftanlage oder um eine mit der Hauptwelle gekoppelte Welle handeln. Die Hauptwelle ist wiederum drehfest mit der Rotornabe verbunden, an welcher die Rotorblätter der Windkraftanlage gehalten sind. Das Planetengetriebe stellt somit die einzige Stufe oder die Eingangsstufe einer ein- oder mehrstufigen Getriebeanordnung einer Windkraftanlage dar.

Der mit der Rotordrehzahl rotierende Planetenträger ist in einem Getriebegehäuse der Windkraftanlage drehbar gelagert. Mehrere Planetenräder sind rotierbar am Planetenträger gelagert und kämmen mit der Innenverzahnung, die sich an der Innenseite des Getriebegehäuses befindet. Die Innenverzahnung ist entweder direkt am Getriebegehäuse angeordnet oder wird durch ein mit dem Getriebegehäuse fest verbundenes Bauteil gebildet. Das Getriebegehäuse bildet somit das Hohlrad des Planetengetriebes. Daneben weist das Planetengetriebe ein ebenfalls mit den Planetenrädern kämmendes Sonnenrad auf, welches mit einer Abtriebswelle des Planetengetriebes fest verbunden oder einstückig damit ausgebildet ist. Diejenige Stirnseite des Planetenträgers, auf der sich die Welle befindet, wird als antriebsseitige Stirnseite bezeichnet. Die gegenüberliegende Stirnseite wird als abtriebsseitige Stirnseite des Planetenträgers bezeichnet.

Die Lagerung des Planetenträgers erfolgt an beiden Stirnseiten durch jeweils ein Zylinderrollenlager, Diese Zylinderrollenlager nehmen beim Betrieb der Windkraftanlage sowohl Radialkräfte als auch Axialkräfte und Kippmomente auf. Besonders hohe Kräfte wirken auf die Zylinderrollenlager ein, wenn diese zumindest einen Teil der aerodynamischen Kräfte, die über die Hauptwelle geleitet werden, abstützen. Doch selbst in denjenigen Fällen, wenn aerodynamische Kräfte und Gewichtskräfte des Rotors vollständig vom Gewicht der Windkraftanlage entkoppelt sind, haben die Zylinderrollenlager des Planetengetriebes beträchtliche, in unterschiedliche Richtungen wirkende Kräfte aufzunehmen. Daher kann ein nennenswertes Kippmoment, insbesondere durch eine ausgangsseitig an das Planetengetriebe angeschlossene Getriebe- und Generatoranordnung vorhanden sein. Hinzu kommen Gewichtskräfte der Komponenten des Planetengetriebes,

Um die verschiedenen beim Betrieb der Windkraftanlage auftretenden Kräfte aufzunehmen, wobei gleichzeitig die Montierbarkeit und Demontierbarkeit des Planetengetriebes sowie der weiteren, an dieses angeschlossenen kraftübertragenden Komponenten der Windkraftanlage beherrscht werden können, sind die den Planetenträger lagernden Zylinderrollenlager vorgesehen.

Bei der erfindungsgemäßen Lageranordnung sind beide Lager als Zylinderrollenlager ausgebildet, wobei wenigstens ein Zylinderrollenlager einen Innen- oder Außenring mit zwei Borden aufweist, wobei der jeweils andere Ring einen Winkelring oder einen losen Bord aufweist.

Vorzugsweise weisen bei der erfindungsgemäßen Lageranordnung beide Zylinderrollenlager einen Innen- oder Außenring mit zwei Borden auf, wobei der jeweils andere Ring einen Winkelring oder einen losen Bord aufweist.

Das Vorsehen eines Zylinderrollenlagers, das einerseits einen Innen- oder Außenring mit zwei Borden und andererseits einen Winkelring an dem anderen Ring aufweist, ermöglicht eine besonders einfache Montierbarkeit, zudem können auch die Welle und das Getriebegehäuse bzw. ein mit dem Getriebegehäuse verbundenes Bauteil, zwischen denen das Zylinderrollenlager angeordnet ist, einfach aufgebaut werden. Dasselbe gilt für die alternative Variante, bei der wenigstens ein Zylinderrollenlager einen Innen- oder Außenring mit zwei Borden aufweist, wobei der jeweils andere Ring einen losen Bord aufweist,

Eine besonders einfache Montierbarkeit ergibt sich, wenn bei der erfindungsgemäßen Lageranordnung der Winkelring oder der lose Bord am Außenring des Zylinderrollenlagers angeordnet ist. Allerdings sind auch alternative Ausführungen möglich, bei denen Winkelring oder der lose Bord am Innenring des Zylinderrollenlagers angeordnet ist.

Erfindungsgemäß wird es bevorzugt, dass der Winkelring oder der lose Bord an der den Planetenrädern abgewandten Seite der Zylinderrollenlager angeordnet ist. Demnach sind der Winkelring bzw. der lose Bord jeweils außenseitig an dem Zylinderrollenlager angeordnet.

Eine Weiterbildung der Erfindung sieht vor, dass die axiale Breite des Winkelrings oder des losen Bords so gewählt ist, dass die Zylinderrollenlager jeweils ein festgelegtes Axialspiel aufweisen. Dementsprechend kann ein gewünschtes oder benötigtes Axialspiel des Zylinderrollenlagers durch die Wahl eines passenden Winkelrings oder eines passenden losen Bords eingestellt werden, wodurch Toleranzen der übrigen mit dem Zylinderrollenlager in Kontakt stehenden Bauteile ausgeglichen werden können.

Eine besonders bevorzugte Variante der erfindungsgemäßen Lageranordnung sieht vor, dass ein Zylinderrollenlager an einer Ringfläche des Getriebegehäuses oder eines damit verbundenen Bauteils anliegt. Zur Montage kann das Zylinderrollenlager somit axial eingesetzt oder eingepresst werden, wodurch eine leichte Montierbarkeit gewährleistet ist.

Daneben betrifft die Erfindung eine Windkraftanlage mit einem Planetengetriebe. Die erfindungsgemäße Windkraftanlage zeichnet sich dadurch aus, dass sie ein Planetengetriebe mit einer Lageranordnung der beschriebenen Art aufweist.

Die Lageranordnung ist insbesondere für Windkraftanlagen, jedoch auch für andere Anwendungen, beispielsweise für stationäre Getriebe in Industrieanlagen oder für mobile Anwendungen geeignet.

### Kurze Beschreibung der Zeichnung

Zwei Ausführungsbeispiele der Erfindung sind in der Zeichnung dargestellt und werden im Folgenden näher beschrieben. Es zeigen:
- Figur 1: die wesentlichen Komponenten einer erfindungsgemäßen Lageranordnung für ein Planetengetriebe in einer geschnittenen Ansicht gemäß einem ersten Ausführungsbeispiel der Erfindung; und
- Figur 2: eine Lageranordnung für ein Planetengetriebe in einer geschnittenen Ansicht gemäß einem zweiten Ausführungsbeispiel der Erfindung.

### Ausführliche Beschreibung der Zeichnung

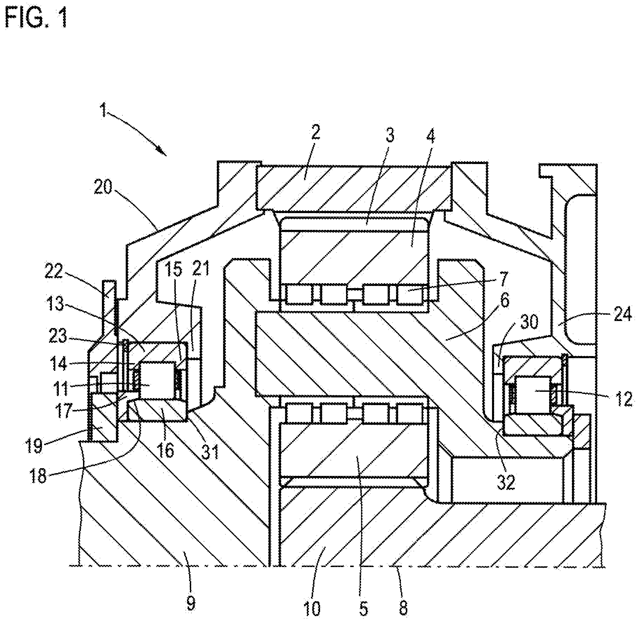

Figur 1 zeigt ein Planetengetriebe 1 einer Windkraftanlage mit einem Getriebegehäuse 2, das das Hohlrad des Planetengetriebes 1 bildet und eine Innenverzahnung 3 aufweist. Mit der innenverzahnung 3 kämmen Planetenräder 4, 5, die auf einem rotierbaren Planetenträger 6 mittels Rollenlagern 7 gelagert sind. Eine strichpunktierte Linie 8 bildet die Rotationsachse des Planetenträgers 6, gleichzeitig ist sie die Symmetrieachse des gesamten Planetengetriebes 1. An der in der Ansicht von Figur 1 linken Seite geht der Planetenträger 6 einstückig in eine Welle 9 über. Die Welle 9 ist fest mit einer Hauptwelle der Windkraftanlage verbunden oder einstückig mit der Hauptwelle ausgebildet. Der Planetenträger 6 rotiert somit mit dem Rotor der Windkraftanlage. Die auf den Rotor einwirkenden aerodynamischen Kräfte sind von dem Planetengetriebe 1 entkoppelt. Dazu ist die Rotorlagerung (nicht gezeigt) der Windkraftanlage als Zweipunktabstützung abgebildet. Diejenige Seite des Planetengetriebes 1, auf der sich der Rotor der Windkraftanlage befindet, in der Ansicht von Figur 1 links, wird als Antriebsseite bezeichnet.

Der Abtrieb des Planetengetriebes 1 auf einen Generator (nicht gezeigt), optional über ein weiteres zwischengeschaltetes Getriebe, erfolgt durch ein konzentrisch zur Linie 8, die die Symmetrieachse angibt angeordnetes Sonnenrad 10, weiches mit den Planetenrädern 5 kämmt. Das Sonnenrad 10 setzt sich in Form einer Welle fort, optional kann es auch mit einer derartigen Welle verbunden sein und ragt abtriebsseitig aus dem Planetengetriebe 1 heraus. Die entsprechende Seite des Planetengetriebes 1 wird als Abtriebsseite bezeichnet.

Der Planetenträger 6 ist mittels zweier Zylinderrollenlager 11, 12 im Getriebegehäuse 2 gelagert. Das in der Ansicht von Figur 1 linke Zylinderrollenlager 11 wird als antriebsseitiges Zylinderrollenlager, das rechte Zylinderrollenlager 12 wird als abtriebsseitiges Zylinderrollenlager bezeichnet. In Figur 1 erkennt man, dass jedes Zylinderrollenlager 11, 12 einen Außenring 13 aufweist, der zwei Borde 14, 15 aufweist, Einem Innenring 16, der sich auf der Welle 9 befindet, ist ein Winkelring 17 zugeordnet. In Figur 1 erkennt man, dass der Winkelring 17 sich an der Außenseite des Innenrings 16 befindet. Der Innenring 16 weist eine schräg verlaufende Fläche 18 auf, die an einer gegengleich ausgebildeten schrägen Fläche des Winkelrings 17 anliegt, zudem liegen der Winkelring 17 und der Innenring 16 in Axialrichtung aneinander an. Der Winkelring 17 dient auch zur axialen Führung der Zylinderrollenlager 11, 12.

An der Außenseite des Winkelrings 17 ist ein Ring 19 angeordnet, durch den der Winkelring 17 gehalten ist. Der Außenring 13 liegt an einer Fläche eines Gehäusebauteils 20 an, das mit dem Getriebegehäuse 2 verbunden ist und einen Bund 21 aufweist, an dem der Außenring 13 in Axialrichtung anliegt. Der Außenring 13 ist durch einen Ring 23 in Axialrichtung gehalten. Die Lageranordnung umfasst zusätzlich ein ringförmiges Bauteil 22, durch das die Zylinderrollenlager 11 abgedeckt und somit vor Verschmutzungen geschützt sind.

Das gegenüberliegende Zylinderrollenlager 12 ist entsprechend spiegelbildlich aufgebaut In Übereinstimmung mit dem Zylinderrollenlager 11 umfasst es einen Außenring, der zwei Borde aufweist sowie einen Innenring mit einem Winkelring. Die Axialluft der Lageranordnung kann entweder über einen Winkelring oder über einen anliegenden Flansch eingestellt werden.

Der Außenring des Zylinderrollenlagers 12 liegt an einem Gehäusebauteil 24 an, der Innenring des Zylinderrollenlagers 12 befindet sich auf dem Planetenträger 6.

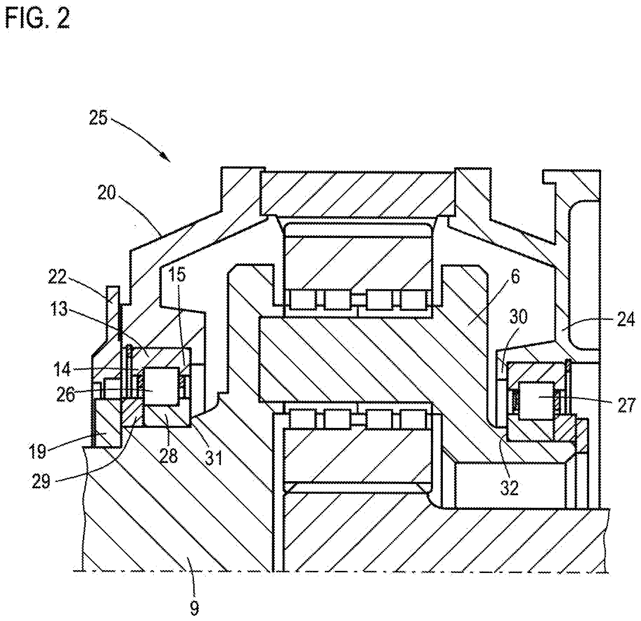

Figur 2 zeigt ein zweites Ausführungsbeispiel eines Planetengetriebes 25, wobei für diejenigen Bauteile, die mit denjenigen des ersten Ausführungsbeispiels übereinstimmen, dieselben Bezugszeichen wie in Figur 1 benutzt werden. Auf eine detaillierte Beschreibung der übereinstimmenden Bauteile wird jedoch an dieser Stelle verzichtet.

Das Planetengetriebe 25 umfasst ein Zylinderrollenlager 26 und ein Zylinderrollenlager 27, die beide einen Außenring 13 mit zwei Borden 14, 15 aufweisen. Ein Innenring 28 weist einen losen Bord 29 auf. Der Ring 19 befindet sich in Axialrichtung neben dem losen Bord 29, wodurch dieser axial gehalten ist. Ein gewünschtes Axialspiel kann durch die Wahl eines losen Bords 29 mit passender Breite eingestellt werden.

Die übrigen im Bereich der Zylinderrollenlager 26, 27 vorhandenen Bauteile wie die Welle 9, das Gehäusebauteil 20, der Ring 19 sowie das Bauteil 22 und der Planetenträger 6 sowie das Gehäusebauteil 24 entsprechen denjenigen des ersten Ausführungsbeispiels. Die Montage des Planetengetriebes 1 ist vergleichsweise einfach, da die Zylinderrollenlager 11, 12, 26, 27 vollständig oder komponentenweise in Axialrichtung montiert werden können. Die Zylinderrollenlager 11, 12, 25, 26 werden axial auf die Welle 9 bzw. den Planetenträger 6 geschoben bzw. gepresst, bis sie an dem Bund 21 des Gehäusebauteils 20 bzw. an einem Bund 30 des Gehäusebauteils 24 anliegen. Der Innenring 16, 28 wird auf die Welle 9 bzw. den Planetenträger 6 aufgeschoben, bis er an einer Stufe 31, 32 anliegt. Bei anderen Ausführungsbeispielen können die Positionen des die beiden Borde aufweisenden Rings und des Winkelrings bzw. des losen Bords vertauscht sein, das heißt. der Winkelring kann auch im Bereich des Außenrings angeordnet sein, wobei der Innenring dann die beiden Borde aufweist, Ebenso kann der lose Bord auch an dem Außenring angeordnet sein, wobei der Innenring dann die beiden Borde aufweist

**Bezugszahlenliste**

| | | | |
|---|---|---|---|
| 1 | Planetengetriebe | 31 | Stufe |
| 2 | Getriebegehäuse | 32 | Stufe |
| 3 | Innenverzahnung | | |
| 4 | Planetenrad | | |
| 5 | Planetenrad | | |
| 6 | Planetenträger | | |
| 7 | Rollenlager | | |
| 8 | Linie | | |
| 9 | Welle | | |
| 10 | Sonnenrad | | |
| 11 | Zylinderrollenlager | | |
| 12 | Zylinderrollenlager | | |
| 13 | Außenring | | |
| 14 | Bord | | |
| 15 | Bord | | |
| 16 | Innenring | | |
| 17 | Winkelring | | |
| 18 | Fläche | | |
| 19 | Ring | | |
| 20 | Gehäusebauteil | | |
| 21 | Bund | | |
| 22 | Bauteil | | |
| 23 | Ring | | |
| 24 | Gehäusebauteil | | |
| 25 | Planetengetriebe | | |
| 26 | Zylinderrollenlager | | |
| 27 | Zylinderrollenlager | | |
| 28 | Innenring | | |
| 29 | Bord | | |
| 30 | Bund | | |

## Patentansprüche

1. Planetengetriebe (1, 25) einer Windkraftanlage umfassend:
- einen fest mit einer Welle verbundenen Planetenträger (6),
- ein Getriebegehäuse (2), in dem der Planetenträger (6) angeordnet ist,
- eine Innenverzahnung (3) des Getriebegehäuses (2),
- mit der Innenverzahnung (3) kämmende Planetenräder (4, 5),
- ein mit den Planetenrädern (4, 5) kämmendes Sonnenrad (10),
- an beiden Stirnseiten der Planetenräder (4, 5) angeordnete Lager zur Lagerung des Planetenträgers (6) in dem Getriebegehäuse (2),
wobei beide Lager als Zylinderrollenlager (11, 12, 26, 27) ausgebildet sind, wobei wenigstens ein Zylinderrollenlager (11, 12, 26, 27) einen Innen- oder Außenring (13, 16) mit zwei Borden (14, 15) aufweist, **dadurch gekennzeichnet, dass** der jeweils andere Ring einen Winkelring (17) oder einen losen Bord (29) aufweist.

2. Planetengetriebe nach Anspruch 1, **dadurch gekennzeichnet, dass** der Winkelring (17) oder der lose Bord (29) am Außenring (13) des Zylinderrollenlagers (11, 12, 26, 27) angeordnet ist.

3. Planetengetriebe nach Anspruch 1, dadurch angeordnet, dass der Winkelring (17) oder der lose Bord (29) am Innenring (16, 28) des Zylinderrollenlagers (11, 12, 26, 27) angeordnet ist.

4. Planetengetriebe nach einem der vorangehenden Ansprüche, **dadurch gekennzeichnet, dass** der Winkelring (17) oder der lose Bord (29) an der den Planetenrädern (4, 5) abgewandten Seite der Zylinderrollenlager (11, 12, 26, 27) angeordnet sind.

5. Planetengetriebe nach einem der vorangehenden Ansprüche, **dadurch gekennzeichnet, dass** die axiale Breite des Winkelrings (17) oder des losen Bords (29) so gewählt ist, dass die Zylinderrollenlager (11, 12, 26, 27) jeweils ein festgelegtes Axialspiel aufweisen.

6. Planetengetriebe nach einem der vorangehenden Ansprüche, **dadurch gekennzeichnet, dass** ein Zylinderrollenlager (11, 12, 26, 27) an einer Ringfläche des Getriebegehäuses (2) oder eines damit verbundenen Bauteils (22) anliegt.

## Claims

1. Planetary transmission (1, 25) of a wind power plant comprising:
- a planetary carrier (6) which is connected fixedly to a shaft,
- a transmission housing (2), in which the planetary carrier (6) is arranged,
- an internal toothing system (3) of the transmission housing (2),
- planetary gears (4, 5) which mesh with the internal toothing system (3),
- a sun gear (10) which meshes with the planetary gears (4, 5),
- bearings which are arranged on the two end sides of the planetary gears (4, 5) for mounting the planetary carrier (6) in the transmission housing (2),
the two bearings being configured as cylindrical roller bearings (11, 12, 26, 27), at least one cylindrical roller bearing (11, 12, 26, 27) having an inner or outer ring (13, 16) with two rims (14, 15), **characterized in that** the respective other ring has an L-section ring (17) or a floating rim (29).

2. Planetary transmission according to Claim 1, **characterized in that** the L-section ring (17) or the floating rim (29) is arranged on the outer ring (13) of the cylindrical roller bearing (11, 12, 26, 27).

3. Planetary transmission according to Claim 1, **characterized in that** the L-section ring (17) or the floating rim (29) is arranged on the inner ring (16, 28) of the cylindrical roller bearing (11, 12, 26, 27).

4. Planetary transmission according to one of the preceding claims, **characterized in that** the L-section ring (17) or the floating rim (29) is arranged on that side of the cylindrical roller bearings (11, 12, 26, 27) which faces away from the planetary gears (4, 5).

5. Planetary transmission according to one of the preceding claims, **characterized in that** the axial width of the L-section ring (17) or of the floating rim (29) is selected in such a way that the cylindrical roller bearings (11, 12, 26, 27) in each case have a fixed axial play.

6. Planetary transmission according to one of the preceding claims, **characterized in that** a cylindrical roller bearing (11, 12, 26, 27) bears against a ring face of the transmission housing (2) or of a component (22) which is connected to the latter.

## Revendications

1. Engrenage planétaire (1, 25) d'une éolienne, lequel comprend :
- un porte-satellites (6) relié de manière fixe à un arbre,
- un carter de protection d'engrenages (2) dans lequel est disposé le porte-satellites (6),
- une denture intérieure (3) du carter de protection d'engrenages (2),
- des satellites (4, 5) s'engrenant avec les dents intérieures (3),
- une roue solaire (10) s'engrenant avec les satellites (4, 5),
- des paliers disposés sur les deux côtés d'extrémité des satellites (4, 5) et destinés au montage du porte-satellites (6) dans le carter de protection d'engrenages (2),
les deux paliers étant conçus comme des paliers à rouleaux cylindriques (11, 12, 26, 27), au moins un palier à rouleaux cylindriques (11, 12, 26, 27) comportant une bague intérieure ou extérieure (13, 16) pourvue de deux bords (14, 15), **caractérisé en ce que** l'autre bague comporte une bague de butée (17) ou un bord lâche (29).

2. Engrenage planétaire selon la revendication 1, **caractérisé en ce que** la bague de butée (17) ou le bord lâche (29) est disposé(e) au niveau de la bague extérieure (13) du palier à rouleaux cylindriques (11, 12, 26, 27).

3. Engrenage planétaire selon la revendication 1, **caractérisé en ce que** la bague de butée (17) ou le bord lâche (29) est disposé au niveau de la bague intérieure (16, 28) du palier à rouleaux cylindriques (11, 12, 26, 27).

4. Engrenage planétaire selon l'une des revendications précédentes, **caractérisé en ce que** la bague de butée (17) ou le bord lâche (29) est disposé du côté des paliers à rouleaux cylindriques (11, 12, 26, 27) qui est opposé aux satellites (4, 5).

5. Engrenage planétaire selon l'une des revendications précédentes, **caractérisé en ce que** la largeur axiale de la bague de butée (17) ou du bord lâche (29) est choisie de manière à ce que les paliers à rouleaux cylindriques (11, 12, 26, 27) présentent chacun un jeu axial défini.

6. Engrenage planétaire selon l'une des revendications précédentes, **caractérisé en ce qu'**un palier à rouleaux cylindriques (11, 12, 26, 27) vient en appui contre une surface annulaire du carter de protection d'engrenages (2) ou d'un composant (22) relié à celui-ci.
